(19) Europäisches Patentamt
European Patent Office
Office européen des brevets

(11) Publication number: 0 050 524
B1

(12) # EUROPEAN PATENT SPECIFICATION

(45) Date of publication of patent specification: **08.01.86**

(51) Int. Cl.$^4$: **C 08 F 8/06**, C 10 M 143/18

(21) Application number: **81304935.0**

(22) Date of filing: **21.10.81**

(54) **Method for oxidatively shearing a polyolefin.**

(30) Priority: **21.10.80 GB 8033916**

(43) Date of publication of application:
**28.04.82 Bulletin 82/17**

(45) Publication of the grant of the patent:
**08.01.86 Bulletin 86/02**

(84) Designated Contracting States:
**AT BE DE FR GB IT LU NL SE**

(56) References cited:
**GB-A- 951 308**
**US-A-4 011 380**
**US-A-4 156 062**

(73) Proprietor: **Orobis Limited**
**Belgrave House 76 Buckingham Palace Road**
**London SW1W 0SU (GB)**

(72) Inventor: **Brankling, David**
**61 Weardale Sutton Park**
**Hull HU7 6DJ (GB)**
Inventor: **Crawford, John**
**Orobis Limited 36 - 44 High Street**
**Redhill Surrey, RHL 1RW (GB)**

(74) Representative: **Harry, John**
**c/o The British Petroleum Company plc Patents**
**Division Chertsey Road**
**Sunbury-on-Thames Middlesex TW16 7LN (GB)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 050 524 B1

**Description**

The present invention relates to a method for oxidatively shearing an olefinic polymer accompanied by introduction into the sheared polymer of carbonyl groups, to lubricating compositions containing the oxidised sheared polymer so-produced and to lubricating compositions containing the oxidised sheared polymer post-reacted with functional group-containing compounds.

Lubricating oils are normally classified in terms of their viscosity at a particular temperature but equally important is a property known as the viscosity index, which is an empirical number giving a measure of the extent to which the viscosity of an oil decreases as the temperature is raised. An oil which satisfies viscosity requirements at both extremes of the temperature range to which it may be subjected is said to have a high viscosity index. This property can be controlled to some extent by refining, but in recent years the trend has been towards multi-grade oils, of extremely high viscosity index, containing olefinic polymer additives as viscosity index improvers. While the olefinic polymers are undoubtedly effective in improving lubricant oil temperature viscosity relationships, their resistance to molecular weight degradation by mechanical or oxidative means, otherwise referred to as their shear stability, is rather low, resulting in curtailment of the viscosity index improver life. In this connection it is known that the shear stability of an olefinic polymer is a function of its carbon backbone chain length, i.e. its number average molecular weight ($\overline{M}_n$), and that higher molecular weight olefinic polymers when mechanically sheared (i.e. by mastication) and/or chemically sheared (e.g. by air oxidation), although degraded in molecular weight, become somewhat improved in shear stability.

It is also advantageous to introduce carbonyl groups into the sheared polymer because such groups can be further reacted with functional group-containing compounds such as, for example amines, to produce condensation products which exhibit multifunctional properties such as for example both viscosity index improver and dispersancy properties.

Such oxidative shear of the olefinic polymers can be accomplished by mastication of the polymer in a Banbury Mixer in the presence of air or by sparging an oxygen-containing gas (e.g. air) into a solution of the polymer in hexane, xylene or a lubricating oil at elevated temperature and atmospheric or elevated pressure, optionally in the presence of a free-radical initiator and optionally also in the presence of metal catalysts such as metals of the platinum-palladium group and compounds (e.g. salts) containing one or more of the metals copper, iron, cobalt, cadmium, manganese, vanadium and the like metal oxidation catalysts. Such oxygen-sparging oxidation methods applied to the olefinic polymers are described in the prior art, for example in US Patent Nos. 2,982,728; 3,316,177; 3,153,025; 3,365,449 and 3,544,520. We have confirmed the results reported in for example USP 4,145,493 that whilst such methods do cause substantial shear, in order to achieve desirable shear stabilities and a sufficiency of carbonyl groups in the sheared polymer it is generally necessary to prolong the oxidation, which results in unacceptable discolouration of the sheared polymer solution, at least in lubricating oil solutions thereof. In those cases in which a lubricating oil is used as the solvent there is a marked tendency for the lubricating oil itself to suffer random oxidation leading to undesirable oxidation products. Some at least of the problems associated with the prior art processes are claimed to be overcome by the process described in the aforesaid USP 4,145,493, using a spraying technique.

USP 4,011,380 describes the oxidation of copolymers of ethylene and olefinic monomers in the presence of from about 0.01 to about 5.0 weight percent or higher based on copolymer/oil solution, of an oil-soluble benzene sulphonic acid or salt thereof. Sodium or calcium salts are reported to promote the oxidation reaction but worsen product colour and magnesium salts are reported to promote the oxidation reaction and provide lighter products.

We have now found that compounds of alkali and alkaline earth metals other than sulphonic acid salts, and indeed the metals themselves, are effective in promoting oxidative shear of olefinic polymers and that the oxidation products can be used as viscosity index improver additives in lubricating oil compositions.

Accordingly, the present invention provides a method for oxidatively shearing a polyolefin accompanied by introduction into the sheared polymer of carbonyl groups which method comprises oxidising the polyolefin in a hydrocarbon solvent in the presence of a catalytic amount of an alkali or alkaline earth metal added im the form of either the elemental metal or a compound other than a benzene sulphonic acid salt.

The term "polyolefin" as used throughout this specification refers to polymers derived from olefinically unsaturated hydrocarbon monomers. The polymer may be either a homopolymer, a copolymer, which term includes random, block and tapered copolymers, and terpolymers, tetrapolymers, etc. Suitable homopolymers include polybutenes, such as polyisobutene having an $\overline{M}_n$ in the range 5,000 to 60,000, preferably in the range 10,000 to 45,000. Suitable copolymers include ethylene copolymers, such as ethylene/propylene e.g. ethylene/propylene copolymers containing from 20 to 65, preferably from 35 to 45 mole percent propylene and having an $\overline{M}_n$ in the range 20,000 to 200,000, preferably from 20,000 to 70,000 and copolymers of a vinyl aromatic monomer, e.g. styrene, alphamethyl styrene and vinyl naphthalene and a conjugated diene monomer, e.g. butadiene and isoprene, of which

hydrogenated block and tapered copolymers containing from 10 to 40, preferably from 15 to 35 weight percent of the vinyl aromatic monomer and having an $\overline{M}_n$ in the range 25,000 to 125,000, preferably from 50,000 to 125,000, are preferred. Such polymers are described in for example US Patents Nos: 3994815; 3775329; 3668125 and 3763044. Suitable random copolymers are described in, for example US Patents Nos: 3,554,911; 3,630,905; 3,752,767 and 3,772,169. Suitable terpolymers include terpolymers of ethylene, a $C_3$ to $C_8$ straight-or branched-chain alpha-olefin, e.g. propylene, and a non-conjugated acyclic or alicyclic diolefin, e.g. 1,4-hexadiene, 1,5-heptadiene, 1,6-octadiene, 1,4-cyclohexadiene, 5-methylene-2-norbornene and 5-ethylidene-2-norbornene, containing at least 30, preferably from 40 to 70 mole percent ethylene, from 15 to 70, preferably from 20 to 58 mole percent alpha-olefin and from 0.5 to 20 mole percent, preferably from 1 to 15, even more preferably from 2 to 10 mole percent diene and having an $\overline{M}_n$ in the range from 15,000 to 200,000, preferably from 20,000 to 70,000. Preferred terpolymers are terpolymers of ethylene, propylene and 1,4-hexadiene or 5-ethylidene-2-norbornene. Suitable tetrapolymers include tetrapolymers of ethylene, a $C_3$ to $C_8$ straight-or branched-chain alpha-olefin and two non-conjugated acyclic or alicyclic diolefins. The preparation of the terpolymers, using Ziegler-Natta catalysts, is described for example in US Patents Nos: 2,933,4890, 3,000,866 and 3,093,621. These terpolymers and tetrapolymers, which are primarily produced for use in elastomeric compositions, are characterised by the absence of chain or backbone unsaturation and contain sites of unsaturation in groups which are pendant to or in cyclic structures outside of the main polymer chain. It is an advantage of the present invention that oxidative shear occurs substantially on the main backbone chains of the polymers in preference to the groups pendant to or outside the backbone chain.

Mixtures of polymers may also be used, if so desired, in the process of the invention. Thus blends may be formulated to provide desirable properties, e.g. improved low temperature thickening. Suitable mixtures of polymers include mixtures of two or more ethylene/propylene copolymers having different ethylene/propylene ratios and/or molecular weights and mixtures of an ethylene/propylene copolymer and a polyisobutene.

Although a wide range of hydrocarbon solvents may be employed, suitable solvents include linear paraffins, e.g. hexane, cyclic paraffins, e.g. cyclohexane, aromatic solvents, e.g. xylene, low molecular weight liquid polyolefins, e.g. polyisobutene and mineral oils of lubricating viscosity derived from petroleum, such as the solvent oils. The hydrocarbon solvent may suitably be present in an amount in the range from 20 to 99%, preferably from 50 to 95%, even more preferably from 70 to 90% by weight, based on the weight of the polyolefin solution. Since the principal application of the oxidatively sheared polymer product is as a lubricating oil additive or as an intermediate in the preparation of lubricating oil additives it is preferred to use a lubricating oil as solvent, thereby avoiding solvent separation and recycle steps. It is an advantage of the method of the present invention that the polyolefin can be oxidised in preference to the lubricating oil.

The oxidation is carried out in the presence of an alkali or an alkaline earth metal, preferably an alkali metal, added in the form of either the elemental metal or a compound of the metal other than the benzene sulphonic acid salt. It is preferred to employ a compound of the metal. Of the alkali metals, lithium, sodium and potassium are preferred. Suitable metal compounds include oxides, hydroxides carbonates, bicarbonates, alkyls, alkoxides and peroxy compounds such as peroxides and peroxycarbonates. Thus lithium hydroxide, potassium hydroxide, potassium carbonate, butyl lithium, sodium hydroxide, potassium ethoxide and potassium peroxycarbonate are specific examples of compounds which may be employed. Whilst the peroxy compounds may be added as such it is particularly preferred to form them 'in situ' during the oxidation reaction. Thus the peroxycarbonate, for example, may be formed by reacting potassium hydroxide with carbon dioxide during the oxidation reaction. Alternatively potassium and sodium catalysts may be activated by treatment with carbon dioxide prior to the oxidation. Only very small amounts of the alkali or alkaline earth metal are necessary to achieve satisfactory shear stabilities and carbonyl group concentrations. Thus amounts as small as 0.01% by weight based on the elemental metal may be used, though it is preferred to use greater than 0.05% by weight. It is advantangeous to use as small an amount as possible because for most applications of the oxidatively sheared polymer the presence of metallic residues in the polymer is undesirable and the use of excessive amounts unnecessarily complicates subsequent filtration for the removal of such residues. The alkali or alkaline earth metal or compound thereof may be unsupported or supported on a high surface area inert support such as silica and may be either dispersed in the solvent or used in the form of a fixed bed.

The polyolefin may suitably be oxidised by contacting a solution of the polymer under suitable conditions of temperature and at atmospheric, subatmospheric or elevated pressures with an oxidising agent such as air or free oxygen, or any oxygen-containing material capable of releasing oxygen under the oxidation conditions. The oxidation may be carried out by methods generally known in the art as represented by, for example. US Patents Nos. 2,982,728, 3,316,177, 3,153,025, 3,365,499, 3,544,520 and 3,864,268. Generally, the oxidation can be carried out over a wide temperature range, though temperatures within the range 100 to 250°C, preferably 120 to 200°C, will usually be

found suitable. Further, oxidation may suitably be conducted at atmospheric or superatmospheric pressures.

Oxidation of the polyolefins dissolved in a solvent such as mineral oil is conveniently carried out, either in batches or continuously, in a stirred reactor with air, or air prediluted with an inert gas such as nitrogen or carbon dioxide, preferably carbon dioxide, so as to minimise explosion hazards. Stirring may be accomplished by any form of high-speed stirrer, such as for example, a turbomixer. The air, or diluted air, is preferably introduced into the polymer solution in a finely divided state, by for example a "Robojet" mixer. The reaction time will depend amongst other things upon the particular polyolefin, the nature of the alkali or alkaline earth metal compound and its particular form and the desired end-use of the oxidised sheared polymer. The progress of the oxidation may be monitored for example by measuring the viscosity of the polymer solution. At any desired viscosity the oxidation may suitably be terminated by blanketing the reactor with nitrogen. At the completion of the oxidation reaction it may be necessary to filter the sheared polymer product.

The sheared polyolefin may then be used as a viscosity index improver additive to provide a finished lubricating oil composition.

In another aspect therefore the invention also provides a finished lubricating oil composition comprising a base oil of lubricating viscosity and a viscosity index improving amount of the sheared polyolefin containing carbonyl groups produced by the method as hereinbefore described.

A wide variety of mineral oils having a broad range of viscosity and origin may be used as the base oil. The mineral oils may be straight-run distillates in the lubricant range, e.g. boiling above 315°C, or may have been further refined by deasphalting, dewaxing, solvent extraction, sorbent treatment or hydrogenation. Also suitable are synthetic hydrocarbon oils in the lubricating range by, for example, polymerisation oligomerisation and alkylation of aromatics with olefins. Oxidation of the polyolefin in lubricating oil as solvent produces a sheared polyolefin which may be incorporated in the finished lubricating oil without removal of the lubricating oil used as solvent. In the case of oxidation in other solvents it may be necessary to separate the solvent from the sheared polymer before this can be incorporated in the finished oil composition.

The finished lubricating composition may suitably contain from 0.01 to 90%, preferably from 0.5 to 40% by weight of the sheared polyolefin.

Alternatively the sheared polyolefin itself may be used as a lubricating oil.

In addition to the sheared polyolefin the finished lubricating oil composition may also contain other additives commonly employed in the art, such as other viscosity index improvers, dispersants, detergents, corrosion inhibitors, antiwear agents etc.

It is believed that the carbonyl groups introduced into the polymer, or at least the ethylene/propylene copolymers, by the oxidative method of the present invention tend to be ketocarbonyl groups rather than aldehydo-carbonyl and carboxylic acid-carbonyl groups. Ketocarbonyl groups are favoured for the further chemical conversion of the sheared polymer. The sheared polyolefins may be reacted through their carbonyl groups with a variety of other reagents, e.g. hydrogen or nirogen, oxygen, sulphur, boron and/or phosphorus-containing compounds, to form multifunctional products. It is preferred to react the sheared polyolefin with one or more non-tertiary nitrogen-containing compounds such as ammonia, primary and secondary amines, diamines and, in particular, polyalkylene polyamines having the formula:—

$$H_2N(CH_2 \cdot \underset{\substack{| \\ R^1}}{CH} \cdot NH)_xH \qquad (I)$$

wherein $R^1$ is either hydrogen or a $C_1$ to $C_6$ alkyl group, preferably hydrogen and x is an integer in the range from 2 to 10, preferably in the range from 2 to 5, to form an imine product having both viscosity index improver and dispersancy properties. Examples of suitable nitrogen-containing compounds include 1,2 - diaminoethane; 1,3 - diaminopropane; 1,4 - diaminobutane; 1,6 - diaminohexane; diethylene triamine, triethylene tetramine, tetraethylene pentamine; 1,2 - propylene diamine di - (1,2 - propylen) triamine, di - (1,3 - propylene) triamine; N,N - dimethyl - 1,3 - diaminopropane; N,N - di - (2 - aminoethyl) ethylene diamine; N,N - di - (2 - hydroxyethyl) - 1,3 - propylene diamine; 3 - dodecycloxypropyl - amine; N - dodecyl - 1,3 - propane diamine; tris - hydroxymethy aminomethane, diisopropanolamine and diethanolamine. Other useful amines include alicyclic diamines such as 1,4 - bis - (aminomethyl) cyclohexane and heterocyclic nitrogen compounds such as imidazolines and N - aminoalkyl piperazines. Commercial mixtures of amine compounds may advantageously be used. There may also be used the mono-succinimide or the bis-succinimide, preferably the mono-succinimide, formed by reacting an alkenyl-succinic anhydride such as polyisobutene succinic anhydride with either a diamine or a polyalkylene polyamine having the formula (I).

The reaction of the sheared polyolefin with the nitrogen-containing compound, for example the polyalkylene polyamine of formul (I), may also be conducted in the presence of an aldehyde, e.g. a formaldehyde-yielding reactant, to form a Mannich condensation product exhibiting both viscosity index improver and dispersant/detergent properties. Suitable examples of formaldehyde-yielding reactants include formalin, paraformaldehyde, other linear and

cyclic formaldehyde polymers and gaseous formaldehyde.

The reaction conditions for the reaction of carbonyl groups with nitrogen-containing compounds both in the presence and absence of aldehydes are well-known in the art and require no further elaboration herein. Thus, for example, the condensation of oxidised rubbery polymers containing a plurality of ketocarbonyl groups with a primary or secondary amine to an aminated ketocarbonyl compound useful as a lubricating oil additive is described in USP 3,864,268. The condensation oil additive is described in USP 3,864,268. The condensation of an oxidised rubbery copolymer with both an aldehyde and a primary or a secondary amine is described in USP 3,872,019.

As an alternative to reacting the sheared polyolefin recovered from the oxidation reaction with the nitrogen-containing compound, the nitrogen-containing compound, and in particular the mono-succinimide, may be added at any time during the oxidation reaction.

In a similar manner derivatives of the sheared polyolefin may be formed by reaction with oxygen-containing compounds, sulphur compounds, boron compounds and/or phosphorus compounds.

In yet another aspect the invention also provides a finished lubricating oil composition comprising a major proportion of a base oil of lubricating viscosity and a viscosity index improving amount of the further-reacted sheared polyolefin.

The invention will now be more particularly described by reference to the following Examples. The apparatus employed in Examples 4 to 7 is illustrated in the accompanying Figure.

With reference to the Figure, 1 is a 2 litre-capacity glass reaction vessel, 2 is a heating mantle, 3 is a Silverson mixer, 4 is a thermocouple, 5 is a temperature control unit, 6 is an air sparge tube, 7 is an air flow rotameter, 8 is a flow rate control valve and 9 is a pull-apart fixed catalyst bed with wire gauze basket for holding the catalyst.

Example 1

135 g of a 15% by weight solution of Ortholeum (RTM) 2052 (an ethylene propylene/1,4-hexadiene terpolymer) in 100SN base oil having a viscosity measured at 100°C of 450 $mm^2/s$ (cS) and a shear stability index as measured by the procedure of DIN 51382 of 34 was heated in the presence of 0.15 g lithium metal to 190°C under a nitrogen blanket. The mixture was stirring using a paddle stirrer whilst blowing air through for 3 hours at a rate of 15 $cm^3$/minute. At the end of this period the viscosity at 100°C was 700 $mm^2/s$ (cS), the shear stability index was 23 and the color as measured by ASTM D1500 was 2.5. In addition there was a sharp peak in the IR spectrum at 1720 $cm^{-1}$ indicating the presence in the sheared polymer of ketocarbonyl groups.

Comparison Test 1

Example 1 was repeated except that lithium metal was not added. The results were as follows:—

Viscosity at 100°C =2100 $mm^2/s$ (cS)

Shear stability index =39

Colour =greater than 8.0

The IR spectrum showed a broad band at 1700 to 1740 $cm^{-1}$ indicating the presence of ketocarbonyl, aldehydic carbonyl and carboxylic acid carbonyl groups.

Example 2

Example 1 was repeated except that the lithium metal was replaced by 0.5 g lithium hydroxide monohydrate. The results were:—

Viscosity at 100°C =1800 $mm^2/s$ (cS)

Shear stability index =28

Colour =2

Sharp peak at 1720 $cm^{-1}$ indicative of ketocarbonyl group.

Example 3

The product of Example 1 was reacted with 5 g diethylene triamine (DETA) at 180°C under nitrogen for 2 hours. The product was then vacuum stripped to remove excess DETA.

The nitrogen content of the product was 0.23% w/w. The carbonyl peak in the IR spectrum at 1720 $cm^{-1}$ had been removed. The product acted as a dispersant and VI improver in bench tests.

Example 4

With reference to the Figure a 13.2% by weight solution of Ortholeum (RTM) 2035 (an ethylene/propylene/1,4-hexadiene terpolymer) in 100SN base oil (1000 g) was placed in vessel 1 and heated to 180°C whilst mixing with a paddle stirrer. On reaching the temperature the paddle stirrer was removed and the Silverson mixer 3 with pump head and catalyst bed 9 (containing 10 g NaOH as a fixed bed) were placed in position. The mixer was switched on to circulate the polymer solution. Air was introduced through the air sparge tube 6 under the head of the mixer at a rate of 5 liters/hour so that much of the air was drawn through the mixer with the polymer solution. The viscosity of the polymer solution was measured at intervals and the oxidation continued until the desired viscosity was reached. The viscosity readings were as follows:—

| Time | Viscosity at 100°C $mm^2/s$ (cSt) |
|---|---|
| Initial | 6834 |
| After 2 hours | 2693 |
| After 3 hours | 1311 |
| After $3\frac{1}{2}$ hours | 785 |

The IR spectrum showed a sharp peak at 1720 $cm^{-1}$ indicating the presence of ketocarbonyl groups in the sheared polymer.

Example 5

Example 4 was repeated on a 13.5% by weight solution of Ortholeum 2035. The viscosity measurements were as follows:

| Time | Viscosity at 100°C ($mm^2/s$ (cSt) |
|---|---|
| Initial | 8921 |
| After 1 hour | 6431 |
| After 2 hours | 5149 |
| After 3 hours | 3609 |
| After 4 hours | 2918 |
| After 5 hours | 2058 |

The IR spectrum of the sheared polymer indicated the presence of ketocarbonyl groups.

Comparison Test 2

Example 4 was repeated in the absence of a catalyst. The viscosity measurements were as follows:

| Time | Viscosity at 100°C $mm^2/s$ (cSt) |
|---|---|
| Initial | 7268 |
| After 1 hour | 7228 |
| After 3 hours | 5515 |
| After 6 hours | 3039 |

This is not an example according to the invention because no catalyst was used and is included only for the purpose of comparison.

Example 6

Example 4 was repeated except that only 100 g polymer solution was used and the catalyst was 5 g NaOH.

The viscosity measurements were as follows:—

| Time | Viscosity at 100°C $mm^2/s$ (cSt) |
|---|---|
| Initial | 6821 |
| After 1 hour | 3705 |
| After 2 hours | 2068 |
| After 2½ hours | 1637 |

The IR spectrum indicated the presence of ketocarbonyl groups in the sheared polymer.

Example 7

Example 5 was repeated except that the 100SN base oil was replaced by Lavera base oil and only 5 g NaOH catalyst was used.

The viscosity measurements were as follows:—

| Time | Viscosity at 100°C $mm^2/s$ (cSt) |
|---|---|
| Initial | 5809 |
| After 1 hour | 2586 |
| After 2 hours | 745 |
| After 3 hours | 99.6 |

The IR spectrum indicated the presence of ketocarbonyl groups in the sheared polymer.

Examples 4 to 7 and Comparison Test 2 demonstrate that the use of a fixed catalyst bed considerably reduces the oxidation time. The product of Comparison Test 2 was much darker than the products of Examples 4 to 7.

Example 8

Into a 1 inch (25.4 mm) internal diameter 1 metre length glass column having an outer jacket containing refluxing decalin (190°C) and packed with ¼ inch (6.35 mm) spurs was added a 13.5% by weight solution of Ortholeum 2035 containing 0.15% by weight potassium carbonate at a temperature of about 140°C. The solution was added in such a manner that the top of the column was flooded in order to provide an even distribution of liquid across the top of the column. The solution was allowed to pass down the column under gravity at a flow rate of 250 ml $hr^{-1}$. Air was passed into the column at the bottom at a flow rate of 5 l $hr^{-1}$, rose through the column countercurrent to the direction of liquid flow and bubbled out through the top. The solution was allowed to flow through the column for a period of 4 hours and collected (1 litre). The results were as follows:—

Initial viscosity of the solution measured at 100°C
=8053 $mm^2/s$ (cSt)
Final viscosity of the product solution at 100°C
=2780 $mm^2/s$ (cSt)

Example 9

Example 8 was repeated. The results were as follows:—

Initial viscosity of solution at 100°C
=8053 $mm^2/s$ (cSt)
Final viscosity of solution at 100°C
=2840 $mm^2/s$ (cSt)

Example 10

The procedure of Example 8 was repeated except that the air flow rate was increased to 10 l $hr^{-1}$. The results were as follows:—

Initial viscosity of solution at 100°C
=8053 $mm^2/s$ (cSt)
Final viscosity of solution at 100°C
=2790 $mm^2/s$ (cSt)

Example 11

The product solution of Example 8 was passed through the column in the manner described in Example 8 except that no further potassium carbonate was added. The results were as follows:—

Initial viscosity of solution at 100°C
=2780 $mm^2/s$ (cSt)
Final viscosity of solution at 100°C
=1580 $mm^2/s$ (cSt)

The colour of the solution visibly deteriorated.

Example 12

The product solution from Example 9 was passed through the column in the manner described in Example 8, ie 0.15% by weight potassium carbonate was added to the initial solution. The results were as follows:—

Initial viscosity of solution at 100°C
=2840 $mm^2/s$ (cSt)
Final viscosity of solution at 100°C
=1630 $mm^2/s$ (cSt)

No colour deterioration of the solution was observed.

Example 13

The procedure of Example 8 was repeated except that instead of adding the potassium carbonate as a solution it was coated on pumice from aqueous solution and the column was packed with the coated pumice. In addition the liquid flow rate was reduced to 60 ml $hr^{-1}$. The results were as follows:—

Initial viscosity of solution at 100°C
=8053 $mm^2/s$ (cSt)
Final viscosity of solution at 100°C
=2820 $mm^2/s$ (cSt)

Example 14

Using the procedure of Example 1, 500 g of a 13.5% by weight solution of Ortholeum 2035 containing 0.15% wt/wt potassium carbonate was oxidised using air at the rate of 6 $dm^3$ $hr^{-1}$ over 3 hours at a temperature of 180°C. The results were as follows:—

Initial viscosity of solution at 100°C
=6000 $mm^2/s$ (cSt)
Final viscosity of solution at 100°C
=600 $mm^2/s$ (cSt)

Example 15

Example 14 was repeated except that carbon dioxide was admixed with the air supply in a 1:1 volume ratio such that the total gas flow was 12 $dm^3hr^{-1}$. The same visosity loss was achieved in 1.5 hours.

Example 16

Example 14 was repeated except that carbon dioxide was admixed with air supply in a 2:1 volume ratio (ie. 7% $O_2$) such that the total gas flow was 18 $dm^3hr^{-1}$. The same viscosity loss was achieved in 1 hour.

Example 17

Example 14 was repeated except that the air supply was reduced to 1.5 $dm^3hr^{-1}$ and carbon dioxide was added at 12 $dm^3hr^{-1}$ (ie 2.5% $O_2$). The same viscosity loss was achieved in 4 hours.

**Claims**

1. A method of oxidatively shearing a polyolefin accompanied by introduction into the sheared polymer of carbonyl groups which method comprises oxidising the polyolefin in a hydrocarbon solvent in the presence of a catalytic amount of an alkali or alkaline earth metal added in the form of either elemental metal or a compound other than a benzene sulphonic acid salt.

2. A method according to claim 1 wherein the polyolefin is a polyisobutene having an $\overline{M}_n$ in the range 5,000 to 60,000.

3. A method according to claim 1 wherein the polyolefin is an ethylene/propylene copolymer-containing from 20 to 65 mole percent propylene and having an $\overline{M}_n$ in the range 20,000 to 200,000.

4. A method according to claim 1 wherein the polyolefin is a copolymer of a vinyl aromatic monomer and a conjugated diene monomer containing from 10 to 40 weight percent of the vinyl aromatic monomer and having an $\overline{M}_n$ in the range 25,000 to 125,000.

5. A method according to claim 1 wherein the polyolefin is a copolymer of ethylene, a $C_3$ to $C_8$ straight-or branched-chain alpha-olefin and one or more non-conjugated acyclic or alicyclic diolefins containing at least 30 mole percent ethylene, from 15 to 70 mole percent alpha-olefin and from 0.5 to 20 mole percent diene and having an $\overline{M}_n$ in the range from 15,000 to 200,000.

6. A method according to claim 5 wherein the alpha-olefin is propylene and the diolefin is one or more of 1,4-hexadiene, 1,5-heptadiene, 1,6-octadiene, 1,4-cyclohexadiene, 5-methylene-2-norbornene and 5-ethylidene-2-norbornene.

7. A method according to claim 5 wherein the polyolefin is a terpolymer of ethylene, propylene and either 1,4-hexadiene or 5-ethylidene-2-norbornene.

8. A method according to any one of the preceding claims wherein the hydrocarbon solvent is a mineral oil of lubricating viscosity.

9. A method according to any one of the preceding claims wherein the oxidation is carried out in the presence of a compound of an alkali or alkaline earth metal.

10. A method according to claim 9 wherein the compound is an oxide, a hydroxide, a carbonate, a bicarbonate, an alkyl, an alkoxide or a peroxy compound.

11. A method according to claim 10 wherein the

peroxy compound is a peroxycarbonate, a peroxysulphate or a peroxysulphite.

12. A method according to claim 10 wherein the peroxy compound is formed 'in situ' during the oxidation reaction.

13. A method according to claim 12 wherein the peroxy compound is peroxycarbonate formed during the oxidation from potassium hydroxide and carbon dioxide.

14. A method according to any one of claims 9 to 13 wherein the compound is a compound of lithium, sodium or potassium.

15. A method according to any one of the preceding claims wherein the alkali or alkaline earth metal or compound thereof is employed in the form of a fixed bed.

16. A method according to any one of the preceding claims wherein the polyolefin is oxidised by contacting a solution of the polymer at a temperature in the range 100 to 250°C and either atmospheric or superatmospheric pressure with an oxidising agent selected from air, free oxygen or an oxygen-containing material capable of releasing oxygen under the oxidation conditions.

17. A method according to claim 16 wherein the hydrocarbon solvent is a mineral oil and the oxidising agent is either air or air prediluted with nitrogen or carbon dioxide.

18. A method according to any one of the preceding claims wherein the oxidatively sheared polymer is reacted with one or more non-tertiary nitrogen-containing compounds.

19. A method according to claim 18 wherein the non-tertiary nitrogen-containing compound is a polyalkylene polyamine having the formula:

$$H_2N(CH_2\underset{\displaystyle R^1}{CH} \cdot NH)_xH \qquad (I)$$

wherein $R^1$ is either hydrogen or a $C_1$ to $C_6$ alkyl group and x is an integer in the range from 2 to 10.

20. A method according to any one of the preceding claims wherein the oxidatively sheared polyolefin is reacted with the mono- or bis-succinimide formed by reacting an alkenyl succinic anhydride with either a diamine or a polyalkylene polyamine having the formula (I).

21. A method according to claim 20 wherein the oxidatively sheared polyolefin is reacted with the mono-succinimide formed by reacting a polyisobutene succinic anhydride with a polyalkylene polyamine having the formula (I).

22. A method according to any one of claims 18 to 21 wherein the reaction of the oxidatively sheared polyolefin with the nitrogen-containing compound is conducted in the presence of an aldehyde to form a Mannich condensation product.

23. A method according to any one of claims 1 to 17 wherein the oxidatively sheared polyolefin is reacted with an oxygen-containing compound, a sulphur compound, a boron compound and/or a phosphorus compound.

24. A method according to any one of claims 18 to 21 wherein a mono-succinimide is added at any time during oxidation of the polyolefin.

25. A finished lubricating oil composition comprising a base oil of lubricating viscosity and a viscosity index improving amount of the sheared polyolefin containing carbonyl groups produced by the process as claimed in any one of claims 1 to 17.

26. A finished lubricating oil composition comprising a major proportion of a base oil of lubricating viscosity and a viscosity index improving amount of the product of the method claimed in any one of claims 18 to 24.

**Patentansprüche**

1. Verfahren zum oxidativen Scheren eines Polyolefins mit begleitender Einführung von Karbonylgruppen in das gescherte Polymer, wobei das Verfahren das Oxidieren des Polyolefins in einem Kohlenwasserstoff-Lösungsmittel in Gegenwart einer katalytischen Menge an Alkali- oder Erdalkalimetall, zugegeben in der Form von elementarem Metall oder in der Form einer Verbindung, die eine andere ist als das Salz der Benzolsulphonsäure, umfaßt.

2. Verfahren nach Anspruch 1, wobei das Polyolefin ein Polyisobuten mit einem $\overline{M}_n$ in dem Bereich 5000 bis 60.000 ist.

3. Verfahren nach Anspruch 1, wobei das Polyolefin ein Ethylen/Propylen-Kopolymer ist mit einem Gehalt von 20 bis 65 Molprozent Propylen und mit einem $\overline{M}_n$ in dem Bereich von 20.000 bis 200.000.

4. Verfahren nach Anspruch 1, wobei das Polyolefin ein Kopolymer aus einem aromatischen Vinyl-Monomer und einem konjugierten Dien-Monomer mit einem Gehalt von 10 bis 40 Gew.-% an aromatischen Vinyl-Monomer und mit einem $\overline{M}_n$ in dem Bereich 25.000 bis 125.000 ist.

5. Verfahren nach Anspruch 1, wobei das Polyolefin ein Kopolymer von Ethylen, einem $C_3$ bis $C_8$ gerad- oder verzweigtkettigem Alpha-Olefin und einem oder mehreren nichtkonjugierten acyclischen oder alicyclischen Diolefinen, mit einem Gehalt von mindestens 30 Molprozent Ethylen, von 15 bis 70 Molprozent Alpha-Olefin und von 0,5 bis 20 Molprozent Dien und mit einem $\overline{M}_n$ in dem Bereich von 1500 bis 200.000 ist.

6. Verfahren nach Anspruch 5, wobei das Alpha-Olefin Propylen ist und das Diolefin eines oder mehrere aus 1,4-Hexadien, 1,5-Heptadien, 1,6-Oktadien, 1,4-Cyclohexadien, 5-Methylen-2-Norbornen und 5-Ethyliden-2-Norbornen ist.

7. Verfahren nach Anspruch 5, wobei das Polyolefin ein Terpolymer von Ethylen, Propylen und entweder 1,4-Hexadien oder 5-Ethyliden-2-Norbornen ist.

8. Verfahren nach einem der vorhergehenden Ansprüche wobei das Kohlenwasserstoff-Lösungsmittel ein Mineralöl von Schmier-Viskosität ist.

9. Verfahren nach einem der vorhergehenden Ansprüche, wobei die Oxidation in Gegenwart einer Alkali- oder Erdalkimetallverbindung durchgeführt wird.

10. Verfahren nach Anspruch 9, wobei die Verbindung eine Oxyd-, eine Hydroxyd-, eine Karbonat-, eine Bikarbonat-, eine Alkyl-, eine Alkoxid-, oder eine Peroxyverbindung ist.

11. Verfahren nach Anspruch 10, wobei die Peroxyverbindung ein Peroxykarbonat, ein Peroxysulphat oder ein Peroxysulfit ist.

12. Verfahren nach Anspruch 10, wobei die Peroxyverbindung während der Oxidationsreaktion "in situ" gebildet wird.

13. Verfahren nach Anspruch 12, wobei die Peroxyverbindung Peroxykarbonat ist, das während der Oxidation aus Kaliumhydroxyd und Kohlendioxyd gebildet wird.

14. Verfahren nach einem der Ansprüche 9 bis 13, wobei die Verbindung eine Verbindung von Lithium, Natrium oder Kalium ist.

15. Verfahren nach einem der vorhergehenden Ansprüche, wobei das Alkali- oder Erdalkalimetall oder dessen Verbindung in der Form eines Festbettes verwendet wird.

16. Verfahren nach einem der vorhergehenden Ansprüche, wobei das Polyolefin durch Kontaktierung eine Lösung des Polymers bei einer Temperatur im Bereich von 100 bis 250°C und bei atmosphärischem oder überatmosphärischem Druck mit einem oxidierenden Mittel, das aus Luft, freiem Sauerstoff oder einem Sauerstoff enthaltenden Material, das zur Freisetzung von Sauerstoff unter den Oxidationsbedingungen fähig ist, ausgewählt ist, oxidiert wird.

17. Verfahren nach Anspruch 16, wobei das Kohlenwasserstoff-Lösungsmittel ein Mineralöl ist und das oxidierende Mittel entweder Luft oder mit Stickstoff oder Kohlendioxyd vorverdünnte Luft ist.

18. Verfahren nach einem der vorhergehenden Ansprüche, wobei das oxidativ gescherte Polymer mit einer oder mehreren nicht-tertiären, Stickstoff enthaltenden Verbindungen umgesetzt wird.

19. Verfahren nach Anspruch 18, wobei die nicht-tertiäre, Stickstoff enthaltende Verbindung ein Polyalkylen-Polyamin mit der Formel:

$$H_2N(CH_2\underset{\substack{|\\ R^1}}{CH}\cdot NH)_xH \qquad (I)$$

ist, wobei $R^1$ entweder ein Wasserstoffatom oder eine $C_1$ bis $C_6$ Alkylgruppe und x eine ganze Zahl im Bereich von 2 bis 10 ist.

20. Verfahren nach einem der vorhergehenden Ansprüche, wobei das oxidativ gescherte Polyolefin umgesetzt wird mit dem Mono- oder Bissuccinimid, das durch Umsetzung eine Alkenyl-Bernsteinsäureanhydrids mit entweder einem Diamin oder einem Polyalkylen-Polyamin mit der Formel (I) hergestellt wird.

21. Verfahren nach Anspruch 20, wobei das oxidativ gescherte Polyolefin mit dem Monosuccinimid, das durch Umsetzung von Polyisobuten-Bernsteinsäureanhydrid mit einem Polyalkylen-Polyamin der Formel (I) gebildet wird, umgesetzt wird.

22. Verfahren nach einem der Ansprüche 18 bis 21, wobei die Umsetzung des oxidativ gescherten Polyolefins mit der Stickstoff enthaltenden Verbindung in Gegenwart eines Aldehyds durchgeführt wird, um ein Mannich-Kondensationsprodukt zu bilden.

23. Verfahren nach einem der Ansprüche 1 bis 17, wobei das oxidativ gescherte Polyolefin mit einer Sauerstoff enthaltenenden Verbindung, einer Schwefelverbindung, einer Borverbindung und/oder einer Phosphorverbindung umgesetzt wird.

24. Verfahren nach einem der Ansprüche 18 bis 21, wobei ein Mono-succinimid zu beliebiger Zeit während der Oxidation des Polyolefins zugegeben wird.

25. Ein fertige Schmierölzusammensetzung, die ein Basis-öl von schmierender Viskosität und eine den Viskositätsindex verbessernde Menge des gescherten Polyolefins mit Karbonylgruppen, hergestellt durch ein Verfahren nach einem der Ansprüche 1 bis 17, enthält.

26. Fertige Schierölzusammensetzung, die einen größeren Anteil eines Basisöls von schmierender Viskosität und eine den Viskositätsindex verbessernde Menge des Produkts des Verfahrens nach einem der Ansprüche 18 bis 24 enthält.

**Revendications**

1. Procédé pour découper une polyoléfine par cisaillement avec oxydation, ce qui s'accompagne d'une introduction de groupes carbonyles dans le polymère ainsi découpé par cisaillement, ce procédé comprenant l'oxydation de la polyoléfine dans un solvant hydrocarboné en présence d'une quantité catalytique d'un métal alcalin ou alcalino-terreux ajoutée sous forme du métal élémentaire ou d'un composé autre qu'un sel d'acide benzène sulfonique.

2. Procédé selon la revendication 1, dans lequel la polyoléfine est un polyisobutène ayant un $\overline{M}_n$ compris entre 5000 et 60 000.

3. Procédé selon la revendication 1, dans lequel la polyoléfine est un copolymère d'éthylène/propylène contenant de 20 à 65 moles % de propylène et ayant un $\overline{M}_n$ compris entre 20 000 et 200 000.

4. Procédé selon la revendication 1, dans lequel la polyoléfine est un copolymère d'un monomère vinyl aromatique et d'un diène conjugué monomère, contenant de 10 à 40% en poids du monomère vinyl aromatique et ayant un $\overline{M}_n$ compris entre 25 000 et 125 000.

5. Procédé selon la revendication 1, dans lequel la polyoléfine est un copolymère d'éthylène, d'une alpha-oléfine linéaire ou ramifiée en $C_3$ à $C_8$ et d'une ou plusieurs dioléfines acycliques ou alicycliques non conjuguées contenant au moins 30 moles % d'éthylène, de 15 à 70 moles % de

l'alphaoléfine et de 0,5 à 20 moles % du diène, et ayant un $\overline{M}_n$ compris entre 15 00 et 200 000.

6. Procédé selon la revendication 5, dans lequel l'alphaoléfine est le propylène et la dioléfine est constituée par une ou plusieurs des dioléfines suivantes: le 1,4-hexadiène, le 1,5-heptadiène, le 1,6-octadiène, le 1,4-cyclohexadiène, le 5-méthylène-2-norbornène et le 5-éthylidène-2-norbornène.

7. Procédé selon la revendication 5, dans lequel la polyoléfine est un terpolymère d'éthylène, de propylène et de 1,4-hexadiène ou bien de 5-éthylidène-2-norbornène.

8. Procédé selon l'une quelconque des revendications précédentes, dans lequel le solvant hydrocarboné est une huile minérale dont la viscosité est celle des produits lubrifiants.

9. Procédé selon l'une quelconque des revendications précédentes, dans lequel on effectue l'oxydation en présence d'un composé d'un métal alcalin ou alcalino-terreux.

10. Procédé selon la revendication 9, dans lequel le composé est un oxyde, un hydroxyde, un carbonate, un bicarbonate, un alkyle, un alcoolate ou un composé peroxygéné.

11. Procédé selon la revendication 10, dans lequel le composé peroxygéné est un peroxycarbonate, un peroxysulfate ou un peroxysulfite.

12. Procédé selon la revendication 10, dans lequel le composé peroxygéné est formé sur place pendant la réaction d'oxydation.

13. Procédé selon la revendication 12, dans lequel le composé peroxygéné est du peroxycarbonate formé au cours de l'oxydation à partir d'hydroxyde de potassium et de gaz carbonique.

14. Procédé selon l'une quelconque des revendications 9 à 13, dans lequel le composé est un composé du lithium, du sodium ou du potassium.

15. Procédé selon l'une quelconque des revendications précédentes, dans lequel on utilise sous la forme d'un lit fixe le métal alcalin ou alcalino-terreux ou son composé.

16. Procédé selon l'une quelconque des revendications précédentes, dans lequel on oxyde la polyoléfine en mettant une solution du polymère, à une température comprise entre 100 et 250°C et à la pression atmosphérique ou à une pression supérieure à la pression atmosphérique, en contact avec un agent oxydant choisi parmi l'air, l'oxygène libre ou une matière contenant de l'oxygène et capable de dégager de l'oxygène dans les conditions de l'oxydation.

17. Procédé selon la revendication 16, dans lequel le solvant hydrocarboné est une huile minérale, et l'agent oxydant est l'air ou de l'air prédilué avec l'azote ou du gaz carbonique.

18. Procédé selon l'une quelconque des revendications précédentes, dans lequel ou soumet le polymère, découpé par cisaillement avec oxydation, à réaction avec un ou plusieurs composés contenant de l'azate non-tertiaire.

19. Procédé selon la revendication 18, dans lequel le composé contenant de l'azote non-tertiaire est une polyalkylène polyamine répondant à la formule:

$$H_2N(\underset{\substack{|\\ R^1}}{CH_2CH} \cdot NH)_xH \qquad (I)$$

dans laquelle $R^1$ représente un atome d'hydrogène ou un groupe alkyle en $C_1$ à $C_6$, et x est nombre entier valant de 2 à 10.

20. Procédé selon l'une quelconque des revendications précédentes, dans lequel on fait réagir la polyoléfine, découpée par cisaillement avec oxydation, avec le mono- ou le bis-succinimide formé par la réaction d'un anhydride alcényl succinique avec une diamine ou avec une polyalkylène polyamine répondant à la formule (I).

21. Procédé selon la revendication 20, dans lequel on fait réagir la polyoléfine, découpée par cisaillement avec oxydation, avec le mono-succinimide formé par la réaction d'un anhydride polyisobutène succinique avec une polyalkylène polyamine répondant à la formule (I).

22. Procédé selon l'une quelconque des revendications 18 à 21, dans lequel on conduit la réaction de la polyoléfine découpée par cisaillement avec oxydation, avec le composé azoté, en opérant en présence d'un aldéhyde pour former un produit de condensation de Mannich.

23. Procédé selon l'une quelconque des revendications 1 à 17, dans lequel on fait réagir la polyoléfine, découpée par cisaillement avec oxydation, avec un composé contenant de l'oxygène, un composé du soufre, un composé du bore et/ou un composé de phosphore.

24. Procédé selon l'une quelconque des revendications 18 à 21, dans lequel on ajoute du mono-succinimide à n'importe quel moment pendant l'oxydation de la polyoléfine.

25. Composition d'huile lubrifiante terminée, comprenant une huile de base dont la viscosité correspond à celle d'un produit lubrifiant et une quantité, capable d'améliorer l'indice de viscosité, de la polyoléfine découpée par cisaillement et contenant des groupes carbonyles produite par le procédé tel que revendiqué dans l'une quelconque des revendications 1 à 17.

26. Composition d'huile lubrifante terminée comprenant une proportion majeure d'une huile de base, dont la viscosité correspond à celle d'un produit lubrifiant, et une quantité, capable d'améliorer l'indice de viscosité, du produit du procédé revendiqué dans l'une quelconque des revendications 18 à 24.

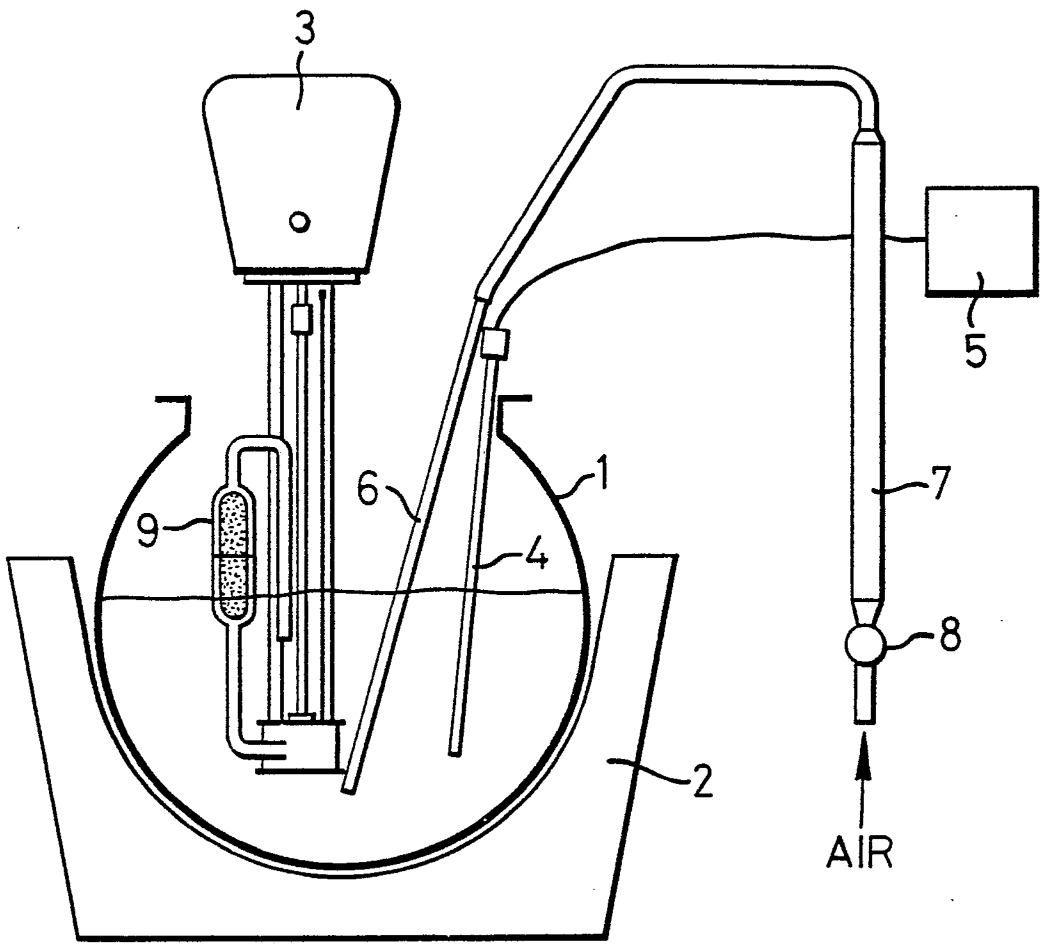
3
5
1
6
9
4
7
8
2
AIR